# EUROPEAN PATENT SPECIFICATION

(11) **EP 4 520 663 B1**
(45) Date of publication and mention of the grant of the patent: **29.04.2026**
(21) Application number: 23195804.2
(22) Date of filing: 06.09.2023
(51) Int. Cl.: B64D 11/04, A47J 31/00, A47J 31/44, A47J 31/46

(54) **AIRCRAFT GALLEY BEVERAGE APPARATUS**
GETRÄNKEVORRICHTUNG FÜR FLUGZEUGBORDKÜCHE
APPAREIL DE BOISSON POUR CUISINE D'AVION

(43) Date of publication of application: 12.03.2025
(73) Proprietor: B/E Aerospace (UK) Limited, Leighton Buzzard, Bedfordshire LU7 4TB (GB)
(72) Inventor: HARRIS, Adam Luke, Leighton Buzzard, LU7 4FS (GB); GRIFFITHS, Peter Ashley, Kensworth, LU6 2PP (GB)
(74) Representative: Dehns

(56) References cited:
- EP-B1- 2 804 511
- WO-A2-2008/103665

## Description

### TECHNICAL FIELD

The present disclosure relates to aircraft galley containers (or aircraft galley inserts), and in particular to beverage apparatus thereof.

### BACKGROUND

Aircraft galleys, which include aircraft galley containers, or aircraft galley inserts, are used in aircraft cabins having limited space to provide means to store, contain, and prepare beverages and food items for passengers on aircraft.

In particular, some aircraft galley inserts are used to make beverages, such as coffee, including filter coffee and espresso-based beverages, hot chocolate, tea, etc.

For ease of access and use of such aircraft beverage apparatus, elements of the beverage apparatus, such as a brewing head, and a drip tray, can protrude from the front of the apparatus, and into the aircraft galley.

EP 2 804 511 B1 discloses a coffee producing machine, or more generally a beverage producing machine comprising simple, inexpensive means to adjust the distance between the rest surface on which the cup is placed and the beverage dispensing nozzle. The beverage producing machine comprises: a housing; a supporting surface on which a beverage collecting container can be placed; a beverage dispensing nozzle arranged above said supporting surface. Moreover, a movable auxiliary surface is provided, combined to the supporting surface, said movable auxiliary surface being movable between an operating position, in which said movable auxiliary surface is approximately parallel to said supporting surface and a rest position, in which said movable auxiliary surface is removed from said supporting surface. The dispensing nozzle is movable between a first position for dispensing a beverage, produced by a brewing unit, in a container, placed on the supporting surface, and a second position for dispensing said beverage in a container placed on said movable auxiliary surface.

It is desirable for improved usability and functionality of aircraft galleys that include beverage apparatus.

In particular, it is desirable to make the most efficient use of space for the beverage apparatus, including considerations of usability for aircraft crew.

### SUMMARY

From one aspect there is provided a beverage apparatus for an aircraft galley. The apparatus includes: a fixed heater module including a hot water source configured to provide hot water; and a dispensing module. The dispensing module is slidably translatable relative to the fixed heater module between a retracted position and an extended position and includes: a brewing head; a support configured to support a beverage receptacle, wherein the support is attached to the brewing head; and a rigid pipe fluidly connecting the hot water source and the brewing head and attached to the brewing head. The brewing head, support and rigid pipe are configured to slidably translate together as a single unit.

In some arrangements the dispensing module includes a dedicated slide rail attached to the brewing head, wherein the dedicated slide rail is mounted partially within the fixed heater module and slidably translatable relative to the fixed heater module.

In some arrangements the support is mounted partially within the fixed heater module and configures to act as a secondary slide rail.

In some arrangements the support is a drip tray.

In some arrangements the hot water source includes a hot water tank including an integral heater.

In some arrangements the hot water source includes a cold water inlet, a heat-exchanging water heater and a hot water outlet.

In some arrangements the dispensing module includes a handle configured such that a user may pull or push the handle to respectively slide the dispensing unit into the extended position or the retracted position.

In some arrangements the dispensing module includes at least one frame element connecting the brewing head to the support.

In some arrangements the at least one frame element includes a pair of vertical bars at a distal end of the brewing head and the support.

In some arrangements the rigid pipe is formed of food-safe plastics or metal material.

In some arrangements the brewing head includes a brewing compartment for holding coffee grounds, a faucet for dispensing coffee, and a filter between the brewing compartment and the faucet.

In some arrangements, the apparatus further includes a first stop element fixed to the fixed heater module and a second stop element fixed to the dispensing module, wherein the second stop element abuts the first stop element when the dispensing module is in the extended position to prevent further movement of the dispensing module beyond the extended position.

In some arrangements, the apparatus further includes a valve configured to allow communication of liquid from the hot water source to the brewing head when the dispensing module is in the extended position and to prevent communication of liquid from the hot water source to the brewing head when the dispensing module is not in the extended position.

There is also provided an aircraft galley including the beverage apparatus of any of the above.

In some arrangements, in the extended position, the dispensing module extends into the aircraft galley space where users operate, and in the retracted position, the dispensing module is in an aircraft galley insert space proximal of a plane provided by the front faces of a plurality of aircraft galley inserts.

The features above may be combined in any combination, as long as the resulting embodiment falls within the scope of the claims, and with further features or aspects as discussed below.

### BRIEF DESCRIPTION OF DRAWINGS

Various embodiments of this disclosure will now be described by way of example only, with reference to the accompanying drawings in which:
Figure 1A illustrates a schematic view of an exemplary beverage apparatus having a brewing head in an extended position;
Figure 1B illustrates a schematic view of the beverage apparatus of Figure 1A, with the brewing head in a retracted position;
Figure 2A illustrates a schematic view of another exemplary beverage apparatus having a brewing head in an extended position; and
Figure 2B illustrates a schematic view of the beverage apparatus of Figure 1A, with the brewing head in a retracted position.

### DETAILED DESCRIPTION OF DRAWINGS

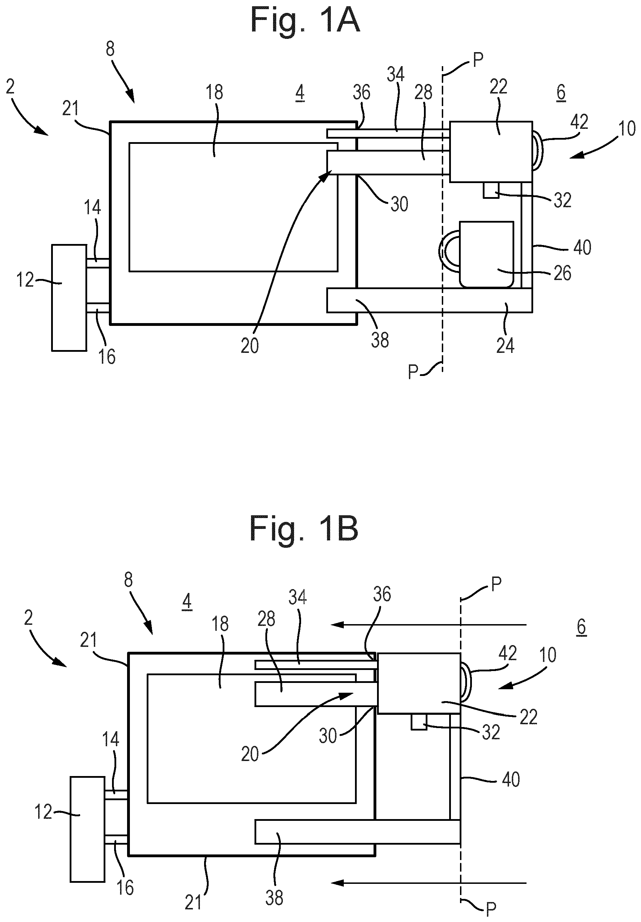

With reference to Figures 1A and 1B a first embodiment of a beverage apparatus 2 is described.

The beverage apparatus 2 is configured for use in an aircraft galley, mounted in a space together with a rack of aircraft galley inserts. A notional plane P separates an aircraft galley insert space 4 and an aircraft cabin crew space 6. The aircraft galley insert space 4 is a location within the aircraft galley where aircraft galley inserts, including the beverage apparatus 2 are mounted. Such aircraft galley inserts may include cupboards, fridges, ovens, microwaves, beverage makes, removable trolleys etc. Different configurations may be used, and the aircraft galley inserts within the space 4 may form a wall at the plane P made of the front faces of the aircraft galley inserts.

The aircraft cabin crew space 6 is the space adjacent the aircraft galley insert space 4 in which cabin crew of an aircraft, or other users, may access and operate the aircraft galley inserts. The aircraft cabin crew space 6 may be limited.

As described in further detail below, part of the beverage apparatus is configured to be selectively extended into the aircraft cabin crew space 6 for ease of use and selectively retracted out of the aircraft cabin crew space 6, into the aircraft galley insert space 4 for maximising the usable space for the cabin crew within the aircraft cabin crew space 6.

The beverage apparatus 2 includes a fixed heater module 8 and a slidably translatable dispensing module 10. The dispensing module 10 is shown in a fully extended position in Figure 1A and in a fully retracted position in Figure 1B.

The illustrated fixed heater module 8 is connected to a bracket 12, which may conform to appropriate ARINC standards for aircraft galley inserts. The bracket 12 includes a water connection 14 and a power connection 16, the water connection 14 providing a water source for the beverage apparatus 2 and the power connection 16 providing electrical power to the beverage apparatus. The power connection 16 may also provide control signals to the beverage apparatus 2 if desired. For example, the control signals could include the option to stop of pause operation of the beverage apparatus 2 in certain flight conditions, such as high turbulence, take off or descent.

The fixed heater module 8 includes a hot water source 18 configured to provide hot water at an outlet 20. The hot water source 18 could take a variety of forms. For example, as illustrated it may include a single hot water tank, with an integral heater, such as an electrically powered heating element. Alternatively, the hot water source 18 could include a cold-water reservoir and a heat-exchanging water heater between an outlet of the cold water reservoir and the outlet 20 of the hot water source 18. Such a heat-exchanging water heater could, in some embodiments utilise waste heat from other parts of the aircraft. In further alternative arrangements, an "instant water boiler" type water heater could be used configured to act directly on he incoming cold water supply from elsewhere in the aircraft, which thus removes the requirement for a reservoir within the fixed heater module 8. Effectively, this arrangement involves a cold-water reservoir located elsewhere on the aircraft, rather than as part of the beverage apparatus 2.

The hot water source 18 illustrated in Figures 1A and 1B has a cuboid shape; however, alternative shapes are envisaged, which enable appropriate water storage and allow space for other internal components.

The fixed heating module 8 includes a housing 21, which is configured to be mounted in an aircraft galley rack together with other aircraft galley inserts.

The dispensing module 10 includes a brewing head 22, a support 24 configured to support a beverage receptacle 26 and a rigid pipe 28. The rigid pipe 28 connects the outlet 20 of the hot water source 18 of the fixed heater module 8 to the brewing head 22.

The rigid pipe 28 is made of either food-safe plastic or food-safe metal material, or could be made of a non-food safe material with an internal food-safe coating. The food safe metal material may in some examples be Stainless Steel Cres Steel 17-4 PH. The pipe 28 is rigid so as to be able to act as a slide rail for the dispensing module 10. It is envisaged that the rigid pipe 28 will act as a simple linear slide rail; however, other possibilities are not excluded. In this manner the housing 21 of the fixed heating module 8 includes an aperture 30 through which the rigid pipe 28 may extend. Rollers (not shown) may be provided at the aperture to improve the sliding motion of the rigid pipe 28 as the dispensing module is translated toward and away from the fixed heating module. The rigid pipe 28 fluidly connects the outlet 20 of the hot water source 18 to the brewing head 22.

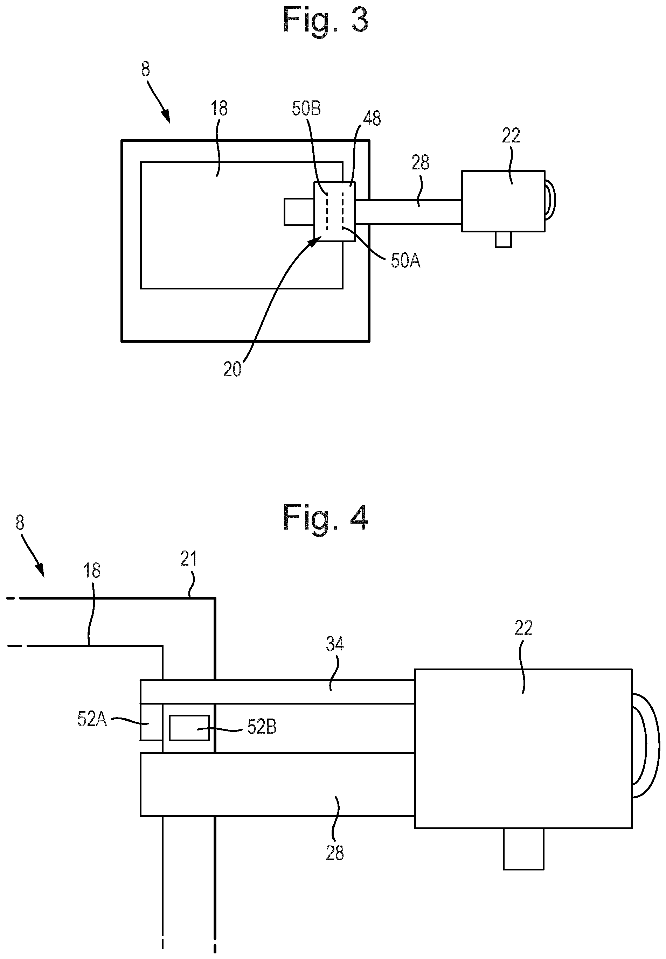

At the outlet 20 of the hot water source 18 appropriate sealing is required to ensure that the rigid pipe 28 is able to slide with respect to the outlet 20 while not allowing the passage of water into the housing 21. One exemplary seal includes a bushing 48 containing at least two O-ring type seals (or O-rings) 50A, 50B. Such an arrangement is illustrated schematically in Figure 3. Figure 3 omits a number of the other features of the brewing apparatus 2 for illustrative purposes. Figure 3 shows the bushing 48 arranged around the rigid pipe 28 at the outlet 20 of the hot water source 18. The illustrated bushing 48 includes a pair of O-ring type seals 50A, 50B Each O-ring type seal 50A, 50B is made of food-safe polymeric material and sized to fit round the rigid pipe 28 at the outlet 20 and to maintain contact with the rigid pipe 28 during a sliding motion of the pipe 28. The use of a pair of O-ring type seals 50A, 50B may be provided to improve the sealing and/or to provide redundancy such that failure of one of the O-ring type seals 50A, 50B will not lead to a failure of the seal as a whole.

The hot water source 18 will be operated such that water can be provided to the rigid pipe 28 via the outlet whenever required by the brewing head 22. That may be done by ensuring the hot water source 18 remains full, or alternatively, the pipe 28 and outlet 20 may be arranged so that even when the source 18 is not full, hot water will still be provided, for example, the outlet 20 could be located lower than what is shown in the figure, and a pump could be provided.

The brewing head 22 is configured to brew and dispense brewed beverage. For example, coffee, which may include filter coffee, espresso or espresso-based coffee, or any other type of coffee, may be dispensed from the brewing head, having been brewed by a device within the brewing head. Alternatively, a brewing device may be included within the fixed heating module, and the dispensing module includes a brewing head which only dispenses brewed beverage.

The illustrated brewing head 22 includes a nozzle 32 for dispensing beverage into a beverage receptacle 26, such as a cup, a mug, or a jug.

The brewing head 22, when configured to brew beverage, may include a compartment configured to hold coffee powder or grounds and to receive pressurised, or standard pressure, hot water or steam, to extract the coffee from the powder or grounds to the beverage. The hot water source 18 is configured to provide pressurised, or standard pressure hot water or steam as appropriate. The brewing head 22 could be configured to brew coffee from coffee pods. The brewing head 22 may include a filter device, such as a metal mesh, or a receptacle for filter paper.

The brewing head 22 may alternatively be configured to dispense hot drinks other than coffee-based drinks, such as hot chocolate.

The brewing head 22 may include features to provide frothed drinks, such as cappuccino or similar drinks. Those features may include a secondary nozzle for providing steam to thereby froth milk. A secondary pipe may be included in the beverage apparatus 2 in such an instance, connected to the hot water supply in such a manner to provide steam to the secondary nozzle.

The brewing head 22 may alternatively be configured to dispense hot water.

The hot water either supplied to, and in some instances, from the brewing head is between about 65 °C and 100 °C, or more particularly between 80 °C and 90 °C, for example about 85 °C. The nozzle 32, when for dispensing water may be a faucet. Hot water is required to prepare the hot drinks; however, avoiding boiling water at 100 °C can be beneficial to reduce the risk of scalding to users.

In addition to the rigid pipe 18, which acts as a primary slide rail, the dispensing module 10 also includes at least one secondary slide rail. The secondary slide rail is also envisaged to act as a simple linear slide rail, but other possibilities are not excluded. The secondary slide rail provides further stabilisation for the dispensing module 10 as it slidably translates. The secondary slide rail may be provided by either a dedicated slide rail 34, which only has the function of acting as a slide rail, or the secondary slide rail may be provided by the support 24 which is configured to support the beverage receptacle 26. In the illustrated apparatus 2, both the dedicated slide rail 34 and the support 24 are present, and so both provide additional stabilisation for the dispensing module 10 when it slidably translates.

A slide rail aperture 36 and a support aperture 38 are provided in the housing 21 of the fixed heater module 8. The dedicated slide rail 34 extends through the slide rail aperture 36 and the support 24 extends through the support aperture 38.

Further supports (not shown) may be included within the housing 21, which ensure the dedicated slide rail 34 and the support 24 slidably translate in a straight line improving the stabilisation provided to the dispensing module 10 as it translates.

The housing 21 and one or more of the rigid pipe 28, dedicated slide rail 34, and support 24 may include stop elements, such as protrusions configured to interface with one another to prevent the dispensing module 10 from translating further out of the fixed heater module 8 beyond the fully extended position and thereby inadvertently becoming detached from the fixed heater module 8. As will be appreciated, stop elements could alternatively be provided elsewhere provided they achieve the same result. Figure 4 illustrates an exemplary pair of stop elements associated with the dedicated slide rail 34 and the housing 21. A first stop element 52A is affixed to the dedicated slide rail 34 and moves therewith when the dispensing module 10 is translated toward the fully extended position. A second stop element 52B is affixed toward a distal end of the housing 21 and configured such that when the dispensing module 10 is in the fully extended position, the first stop element 52A abuts the second stop element 52B and thereby prevents the dispensing module 10 moving beyond the fully extended position. While this is shown as one particular example, with the stops being simple mechanical bumpers, other configurations are envisaged, such as hooks, or stop elements being arranged on other features of the dispensing module 10 and fixed heater module 8 respectively.

Features, such as ridges and grooves, with resilient character may be provided to maintain the dispensing module 10 in the fully extended position and and/or the fully retracted position respectively, until sufficient force is applied by a user to push the ridges out of the grooves and enable sliding from one position to the other. These ridges and grooves are designed in such a way that incremental movement resulting from a small force, such as turbulence forces or other aircraft movement, e.g., acceleration, or from slight accidental forces from the cabin crew, would be prevented, yet a larger force would overcome the resilience of the ridge to allow movement of the dispensing module 10 when desired and an intentional (i.e., higher and/or prolonged) force is applied. Such ridges and grooves may have, for example, a semi-circular, elliptical, or other arcuate shape in cross section. This ensures that the brewing head 22 and support 24 do not inadvertently slide due to turbulent forces within the aircraft, or slight accidental pushing from a user.

The support 24 is configured to support a beverage receptacle 26, such as a cup, mug, or a jug for receiving beverage from the brewing head 22. The support 24 may also be configured to act as a drip tray. In this manner, the support 22 may include grooves and/or slots for channelling fluid, such as spilled coffee. The fluid may be channelled to a collection reservoir, either located within the drip tray, included as an additional component in the dispending module 10, or located within the fixed heater module 8. The support may include a perforated plate on which the beverage receptacle 26 may sit, with a collection reservoir directly below the plate.

The support 24 and the brewing head 22 are mechanically fixed to one another so that they slidably translate together as a single piece. A frame element 40, which, as illustrated, is in the form of two vertical bars at either side of the front, or distal end, of the dispensing module 10, each of the bars being connected to the brewing head 22 at one end, and to the support 24 at their other end. Alternative arrangements of frame element 40, or other means for securing the brewing head 22 and support 24 together are also envisaged. For example, the brewing head 22 and support 24 may be formed as an integral piece. Alternatively, a connecting member may be included within the fixed heater module 8 connecting the support 24 to the rigid pipe 28 and or dedicated slide rail 34 at a proximal end thereof.

Importantly, the support 24 and the brewing head 22, together with the rigid pipe 28 are slidably translated as a single piece, so that by a single operation a user, such as aircraft cabin crew, may move the dispensing module 10 into the retracted position (or the stowed position). Doing so as a single operation both saves time, which is particularly important in an aircraft cabin environment, and reduces the chance of only one of the brewing head 22or support 24 being stowed properly, with the other remaining in the aircraft cabin space and thus potentially creating a hazard when other aircraft galley containers are being used.

The illustrated dispensing module 10 includes a handle 42 by which the user, or cabin crew, may move the dispensing module between the fully extended and the fully retracted positions. It will be appreciated that alternative arrangements of handle 42 may be used other than what is shown. In some arrangements, the handle may even be omitted, and instead, one of the frame elements 40 may be gripped by a user to provide the function of the handle.

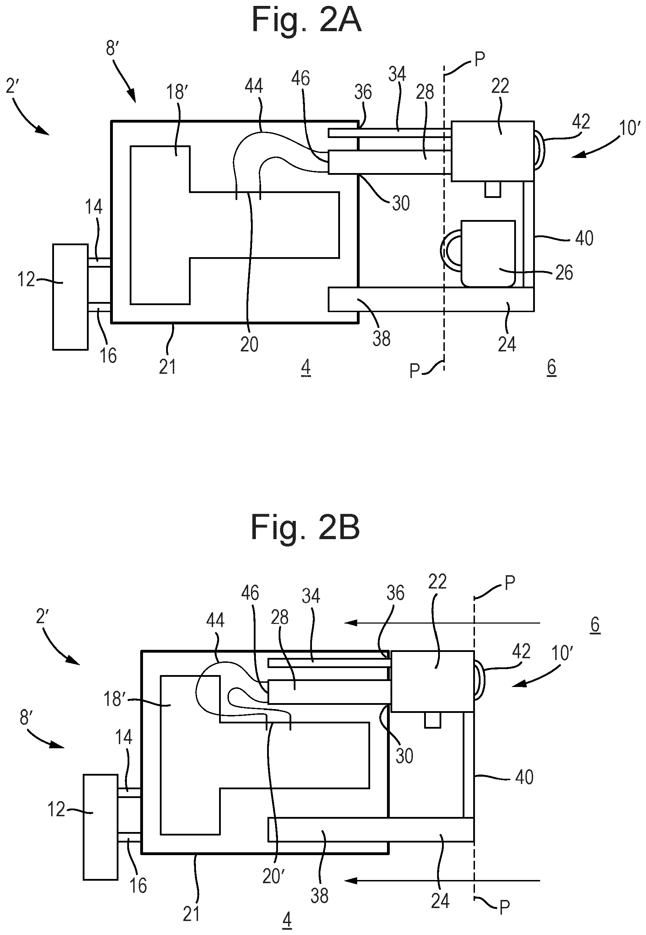

An alternative embodiment of beverage apparatus 2' is shown in Figures 2A and 2B. The same reference numerals are provided for like components and corresponding but different components are provided with a dash, for example, the beverage apparatus of Figures 2A and 2B has outlet 20' in contrast to outlet 20 of the beverage apparatus of Figures 1A and 1B.

This beverage apparatus 2' shares similarities with the first embodiment, and only where the components differ are they described below. In particular the connection between the outlet 20' of the hot water source 18' and the rigid pipe 28 and accordingly, the shape of the hot water source 18' are different.

In this arrangement, there is a flexible connecting pipe 44 connecting an outlet 20' of the hot water source 18' to an inlet 46 of the rigid pipe 28.

This flex of the flexible connecting pipe 44 enables the rigid pipe 28 to slide translatable into the fixed heater module 8' without the requirement for dynamic sealing between the outlet 20' of the hot water source 18' and a part of the rigid pipe 28 slidingly engaged therewith, as in the arrangement of Figure 1A and 1B. Rather, the flexible connecting pipe 44 is securely attached to the outlet 20' of the hot water source 18', either being formed in the same step, or using a static seal and also attached to the rigid pipe 28.

The flexible connecting pipe 44 has at least an internal layer of food-safe material, such as a polymeric material, and may have external strengthening layers of material, such as a double-coiled metal pipe, which allows flexibility.

As is shown in Figures 2A and 2B, the hot water source 18' includes a reservoir or tank with a different geometry. Such a geometry provides space in which the flexible connecting pipe 44 is able to move when the dispensing module 10 is translated to the retracted position. AS will be appreciated, a side view is shown, and there is more space is available to the side of part of the hot water source 18', which is illustrated by the overlap of the flexible connecting pipe 44 and the hot water source 18' in Figure 2B.

With reference to both arrangements, the use of the beverage apparatus 2, 2' is described below.

When not in use, the beverage apparatus 2, 2' will have the dispensing module 10, 10' stowed in the fully retracted position (Figures 1B and 2B). This ensures that the working space, or aircraft cabin space, in which the cabin crew or users operate, is kept free. Only the handle 42, if anything extends into the aircraft cabin space.

When required for use, a user, e.g., aircraft cabin crew is able to slide the dispensing module 10, 10' distally into the aircraft cabin crew space 6. The rigid pipe 28, together with the at least one secondary slide rail, which, as above, is provided by the dedicated slide rail 34, or the support 24, or both, slide in the distal direction relative to the fixed heater module 8, 8'. The connection with the hot water source 18, 18' is maintained with the rigid pipe 28, so as to ensure hot water may still be provided to the brewing head 22. The user may then operate the brewing head 22 to dispense beverage. The operation of the brewing head 22 may include use of a user interface, of controls attached to the brewing head 22. In the extended position, the use of the brewing head 22 and accessibility for the beverage receptacle 26 is easier for the user that it would be in the retracted position.

After use, the user, or cabin crew, may push the dispenser module 10, 10' proximally back to the retracted, or stowed position. The brewing head 22 and the support 24 slide into the retracted position in a single operation (i.e., a single push) from the user. Locking or latching features may be included to retain the dispenser module 10, 10' in the retracted position, until a user needs to slide the dispenser module 10, 10' back to the extended position for use.

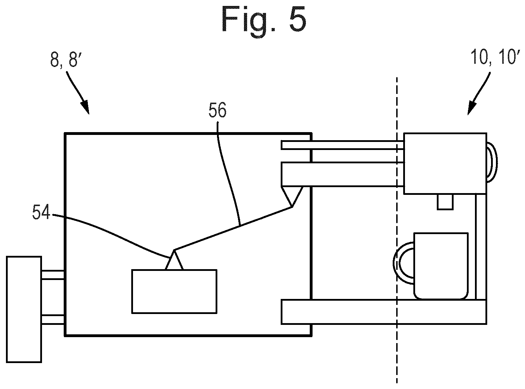

Optionally, controls, such as microswitches, which switch the brewing head 22 on or off could be linked to the location of the brewing head 22. This is illustrated in Figure 5, which shows schematically one example of a water control valve 54 whereby the valve 54 is configured to only be open when the dispensing module 10 is in the fully extended position. Control of the valve may be by electronic operation, such as by a push microswitch arranged where it will be pushed when the dispensing module 10 is in the fully extended position, such as on one of the stop elements when present. Alternatively, the valve may be controlled by a mechanical means, such as a rigid linkage 56, which opens and shuts the valve 54 as a direct mechanical result of the movement of the dispensing module 10 into and out of the fully extended position respectively. Figure 5 does not show the water reservoir in full, although it is envisaged the arrangement thereof could use any of a local hot-water reservoir, a local cold water reservoir, or a remote cold-water source located elsewhere on the aircraft.

Such controls or microswitches (or larger switches) may also be used to operate locking features, such as an electronically actuated locking pin to selectively maintain the dispensing module 10 in either the fully extended or fully retracted positions respectively when desired. For example, a locking pin could be actuated to engage with the dispensing module 10 when the dispensing module 10 is in the fully extended position and then could be retracted out of engagement when desired ready to stow the dispensing module 10 into the retracted position, at which point a secondary locking pin could be actuated to engage the dispensing module 10 and hold it in the retracted position until a user overrides the secondary locking pin engagement. When such locking features are included, distinct controls may be provided for them, separately to the microswitches or controls which are pushed as a result of movement of the dispensing module 10. Said distinct controls may be operated by the cabin crew. In some configurations, the locking features or locking pins may be actuated after a short, e.g., 0.1 to 2 second, time delay between the microswitch being pushed as a result of the dispensing module 10 being placed in the fully retracted or fully extended position respectively. The locking features or locking pins may only then be retracted upon a distinct, use operated control, such as a 'release' push button.

These beverage apparatuses 2, 2' enable the space for the aircraft crew in the aircraft galley to be used flexibly. That is, when the beverage apparatus is required for use, the brewing head and support for the beverage receptacle can be placed extended and used to produce beverage, with greater ease due to their protrusion into the working space of the aircraft crew. Then, while not in use, the brewing head and support can be placed in their retracted position, i.e., stowed, so that the working space in the aircraft cabin adjacent the aircraft galley containers is maximised, without protrusions from the galley containers impeding the aircraft crew or providing potential hazards for the aircraft crew to knock into.

As used herein, the term proximal means the direction toward the aircraft galley containers and away from the aircraft cabin space, i.e., away from the end of the beverage apparatus 2 from which beverage is dispensed. The term distal means the direction toward the aircraft cabin space, i.e., toward the end of the beverage apparatus 2 from which the beverage is dispensed.

The arrangements described above and illustrated in the figures are exemplary, and not exhaustive.

## Claims

1. A beverage apparatus (2; 2') for an aircraft galley comprising:
a fixed heater module (8; 8') including a hot water source (18; 18') configured to provide hot water; and
a dispensing module (10; 10'), wherein the dispensing module (10; 10') is slidably translatable relative to the fixed heater module (8; 8') between a retracted position and an extended position and comprises:
a brewing head (22);
a support (24) configured to support a beverage receptacle (26), wherein the support (24) is attached to the brewing head (22); and
a rigid pipe (28) fluidly connecting the hot water source (18; 18') and the brewing head (22) and attached to the brewing head (22),
wherein the brewing head (22), support (24) and rigid pipe (28) are configured to slidably translate together as a single unit.

2. The beverage apparatus of claim 1, wherein the dispensing module (10; 10') comprises a dedicated slide rail (34) attached to the brewing head (22), wherein the dedicated slide rail (34) is mounted partially within the fixed heater module (8; 8') and slidably translatable relative to the fixed heater module (8; 8').

3. The beverage apparatus of claim 1 or 2 wherein the support (24) is mounted partially within the fixed heater module (8; 8') and configures to act as a secondary slide rail.

4. The beverage apparatus of any preceding claim, wherein the support (24) is a drip tray.

5. The beverage apparatus of any preceding claim wherein the hot water source (18; 18') comprises a hot water tank including an integral heater.

6. The beverage apparatus of any of claims 1 to 4, wherein the hot water source (18; 18') comprises a cold water inlet, a heat-exchanging water heater and a hot water outlet (20; 20').

7. The beverage apparatus of any preceding claim, wherein the dispensing module (10; 10') includes a handle (42) configured such that a user may pull or push the handle (42) to respectively slide the dispensing module (10; 10') into the extended position or the retracted position.

8. The beverage apparatus of any preceding claim, wherein the dispensing module (10; 10') includes at least one frame element (40) connecting the brewing head (22) to the support (24).

9. The beverage apparatus of claim 8, wherein the at least one frame element (40) includes a pair of vertical bars (40) at a distal end of the brewing head (22) and the support (24).

10. The beverage apparatus of any preceding claim wherein the rigid pipe (28) is formed of food-safe plastics or metal material.

11. The beverage apparatus of any preceding claim, wherein the brewing head (22) includes a brewing compartment for holding coffee grounds, a faucet for dispensing coffee, and a filter between the brewing compartment and the faucet.

12. The beverage apparatus of any preceding claim, further comprising a first stop element (52A) fixed to the fixed heater module (8) and a second stop element (52B) fixed to the dispensing module (10), wherein the second stop element (52B) abuts the first stop element (52A) when the dispensing module (10) is in the extended position to prevent further movement of the dispensing module (10) beyond the extended position.

13. The beverage apparatus of any preceding claim, further comprising a valve (54) configured to allow communication of liquid from the hot water source (18; 18') to the brewing head (22) when the dispensing module (10) is in the extended position and to prevent communication of liquid from the hot water source (18; 18') to the brewing head (22) when the dispensing module (10) is not in the extended position.

14. An aircraft galley comprising a beverage apparatus (2; 2') as recited in any preceding claim.

15. The aircraft galley of claim 14, wherein:
in the extended position, the dispensing module (10; 10') extends into the aircraft galley space (6) where users operate; and
in the retracted position, the dispensing module (10; 10') is in an aircraft galley insert space (4) proximal of a plane (P) provided by the front faces of a plurality of aircraft galley inserts.

## Patentansprüche

1. Getränkevorrichtung (2; 2') für eine Flugzeugbordküche, umfassend:
ein feststehendes Heizmodul (8; 8'), das eine Heißwasserquelle (18; 18') beinhaltet, die dazu konfiguriert ist, Heißwasser bereitzustellen; und
ein Ausgabemodul (10; 10'), wobei das Ausgabemodul (10; 10') relativ zum feststehenden Heizmodul (8; 8') zwischen einer eingefahrenen Position und einer ausgefahrenen Position gleitend verschiebbar ist und Folgendes umfasst:
einen Brühkopf (22);
einen Träger (24), der dazu konfiguriert ist, einen Getränkebehälter (26) zu tragen, wobei der Träger (24) am Brühkopf (22) befestigt ist; und
ein starres Rohr (28), das die Heißwasserquelle (18; 18') und den Brühkopf (22) fluidverbindet und am Brühkopf (22) befestigt ist,
wobei der Brühkopf (22), der Träger (24) und das starre Rohr (28) dazu konfiguriert sind, sich zusammen als eine einzige Einheit gleitend verschieben zu lassen.

2. Getränkevorrichtung nach Anspruch 1, wobei das Ausgabemodul (10; 10') eine spezielle Gleitschiene (34) umfasst, die am Brühkopf (22) befestigt ist, wobei die spezielle Gleitschiene (34) teilweise innerhalb des feststehenden Heizmoduls (8; 8') montiert und relativ zum feststehenden Heizmodul (8; 8') gleitend verschiebbar ist.

3. Getränkevorrichtung nach Anspruch 1 oder 2, wobei der Träger (24) teilweise innerhalb des feststehenden Heizmoduls (8; 8') montiert und dazu konfiguriert ist, als sekundäre Gleitschiene zu wirken.

4. Getränkevorrichtung nach einem der vorhergehenden Ansprüche, wobei der Träger (24) eine Tropfschale ist.

5. Getränkevorrichtung nach einem der vorhergehenden Ansprüche, wobei die Heißwasserquelle (18; 18') einen Heißwassertank umfasst, der einen integrierten Erhitzer beinhaltet.

6. Getränkevorrichtung nach einem der Ansprüche 1 bis 4, wobei die Heißwasserquelle (18; 18') einen Kaltwassereinlass, einen wärmetauschenden Wassererhitzer und einen Heißwasserauslass (20; 20') umfasst.

7. Getränkevorrichtung nach einem der vorhergehenden Ansprüche, wobei das Ausgabemodul (10; 10') einen Griff (42) beinhaltet, der derart konfiguriert ist, dass ein Benutzer am Griff (42) ziehen oder ihn drücken kann, um das Ausgabemodul (10; 10') in die ausgefahrene Position bzw. in die eingefahrene Position gleiten zu lassen.

8. Getränkevorrichtung nach einem der vorhergehenden Ansprüche, wobei das Ausgabemodul (10; 10') mindestens ein Rahmenelement (40) beinhaltet, das den Brühkopf (22) mit dem Träger (24) verbindet.

9. Getränkevorrichtung nach Anspruch 8, wobei das mindestens eine Rahmenelement (40) ein Paar vertikaler Stangen (40) an einem distalen Ende des Brühkopfs (22) und des Trägers (24) beinhaltet.

10. Getränkevorrichtung nach einem der vorhergehenden Ansprüche, wobei das starre Rohr (28) aus lebensmittelechtem Kunststoff oder Metallmaterial ausgebildet ist.

11. Getränkevorrichtung nach einem der vorhergehenden Ansprüche, wobei der Brühkopf (22) ein Brühfach zum Aufnehmen von Kaffeemalgut, einen Auslauf zum Ausgeben von Kaffee und einen Filter zwischen dem Brühfach und dem Auslauf beinhaltet.

12. Getränkevorrichtung nach einem der vorhergehenden Ansprüche, ferner umfassend ein erstes Anschlagelement (52A), das am feststehenden Heizmodul (8) fixiert ist, und ein zweites Anschlagelement (52B), das am Ausgabemodul (10) befestigt ist, wobei das zweite Anschlagelement (52B) am ersten Anschlagelement (52A) anliegt, wenn sich das Ausgabemodul (10) in der ausgefahrenen Position befindet, um eine weitere Bewegung des Ausgabemoduls (10) über die ausgefahrene Position hinaus zu verhindern.

13. Getränkevorrichtung nach einem der vorhergehenden Ansprüche, ferner umfassend ein Ventil (54), das dazu konfiguriert ist, eine Flüssigkeitsverbindung von der Heißwasserquelle (18; 18') zum Brühkopf (22) zu ermöglichen, wenn sich das Ausgabemodul (10) in der ausgefahrenen Position befindet, und eine Flüssigkeitsverbindung von der Heißwasserquelle (18; 18') zum Brühkopf (22) zu verhindern, wenn sich das Ausgabemodul (10) nicht in der ausgefahrenen Position befindet.

14. Flugzeugbordküche, umfassend eine Getränkevorrichtung (2; 2') nach einem der vorhergehenden Ansprüche.

15. Flugzeugbordküche nach Anspruch 14, wobei:
das Ausgabemodul (10; 10') sich in der ausgefahrenen Position in den Flugzeugbordküchenraum (6) erstreckt, in dem Benutzer arbeiten; und
das Ausgabemodul (10; 10') sich in der eingefahrenen Position in einem Flugzeugbordkücheneinsatzraum (4) proximal zu einer Ebene (P) befindet, die durch die Vorderseiten einer Vielzahl von Flugzeugbordkücheneinsätzen bereitgestellt wird.

## Revendications

1. Appareil de boisson (2 ; 2') pour une cuisine d'avion comprenant :
un module de chauffage fixe (8 ; 8') comportant une source d'eau chaude (18 ; 18') configurée pour fournir de l'eau chaude ; et
un module de distribution (10 ; 10'), dans lequel le module de distribution (10 ; 10') peut être translaté de manière coulissante par rapport au module de chauffage fixe (8 ; 8') entre une position rétractée et une position étendue et comprend :
une tête d'infusion (22) ;
un support (24) configuré pour supporter un récipient à boisson (26), dans lequel le support (24) est fixé à la tête d'infusion (22) ; et
un tuyau rigide (28) reliant de manière fluide la source d'eau chaude (18 ; 18') et la tête d'infusion (22) et fixé à la tête d'infusion (22),
dans lequel la tête d'infusion (22), le support (24) et le tuyau rigide (28) sont configurés pour translater ensemble de manière coulissante comme une seule unité.

2. Appareil de boisson selon la revendication 1, dans lequel le module de distribution (10 ; 10') comprend un rail de glissement dédié (34) fixé à la tête d'infusion (22), dans lequel le rail de glissement dédié (34) est monté partiellement à l'intérieur du module de chauffage fixe (8 ; 8') et peut être translaté de manière coulissante par rapport au module de chauffage fixe (8 ; 8').

3. Appareil de boisson selon la revendication 1 ou la revendication 2, dans lequel le support (24) est monté partiellement à l'intérieur du module de chauffage fixe (8 ; 8') et configuré pour agir comme un rail de glissement secondaire.

4. Appareil de boisson selon une quelconque revendication précédente, dans lequel le support (24) est un plateau d'égouttage.

5. Appareil de boisson selon une quelconque revendication précédente dans lequel la source d'eau chaude (18 ; 18') comprend un réservoir d'eau chaude comportant un élément chauffant intégré.

6. Appareil de boisson selon l'une quelconque des revendications 1 à 4, dans lequel la source d'eau chaude (18 ; 18') comprend une entrée d'eau froide, un chauffe-eau à échange de chaleur et une sortie d'eau chaude (20 ; 20').

7. Appareil de boisson selon une quelconque revendication précédente, dans lequel le module de distribution (10 ; 10') comporte une poignée (42) configurée de sorte qu'un utilisateur puisse tirer ou pousser la poignée (42) pour faire glisser respectivement le module de distribution (10 ; 10') dans la position étendue ou la position rétractée.

8. Appareil de boisson selon une quelconque revendication précédente, dans lequel le module de distribution (10 ; 10') comporte au moins un élément de cadre (40) reliant la tête d'infusion (22) au support (24).

9. Appareil de boisson selon la revendication 8, dans lequel le au moins un élément de cadre (40) comporte une paire de barres verticales (40) au niveau d'une extrémité distale de la tête d'infusion (22) et du support (24).

10. Appareil de boisson selon une quelconque revendication précédente, dans lequel le tuyau rigide (28) est formé de plastiques ou de matériaux métalliques de qualité alimentaire.

11. Appareil de boisson selon une quelconque revendication précédente, dans lequel la tête d'infusion (22) comporte un compartiment d'infusion pour contenir du marc de café, un robinet pour distribuer le café et un filtre entre le compartiment d'infusion et le robinet.

12. Appareil de boisson selon une quelconque revendication précédente, comprenant en outre un premier élément d'arrêt (52A) fixé au module de chauffage fixe (8) et un second élément d'arrêt (52B) fixé au module de distribution (10), dans lequel le second élément d'arrêt (52B) vient en butée contre le premier élément d'arrêt (52A) lorsque le module de distribution (10) est en position étendue pour empêcher tout mouvement supplémentaire du module de distribution (10) au-delà de la position étendue.

13. Appareil de boisson selon une quelconque revendication précédente, comprenant en outre une vanne (54) configurée pour permettre une communication de liquide de la source d'eau chaude (18 ; 18') à la tête d'infusion (22) lorsque le module de distribution (10) est dans la position étendue et pour empêcher la communication de liquide de la source d'eau chaude (18 ; 18') à la tête d'infusion (22) lorsque le module de distribution (10) n'est pas dans la position étendue.

14. Cuisine d'avion comprenant un appareil de boisson (2 ; 2') tel que décrit dans une quelconque revendication précédente.

15. Cuisine d'avion selon la revendication 14, dans laquelle :
dans la position étendue, le module de distribution (10 ; 10') s'étend dans l'espace de cuisine d'avion (6) où des utilisateurs travaillent ; et
dans la position rétractée, le module de distribution (10 ; 10') se trouve dans un espace d'insertion de cuisine d'avion (4) proximale d'un plan (P) fourni par les faces avant d'une pluralité d'inserts de cuisine d'avion.
